# EUROPÄISCHE PATENTSCHRIFT

(11) **EP 0 594 885 B1**
(45) Veröffentlichungstag und Bekanntmachung des Hinweises auf die Patenterteilung: **15.03.2000**
(21) Anmeldenummer: 92118548.4
(22) Anmeldetag: 29.10.1992
(51) Int. Cl.: G05D 23/00, G05D 23/19, F24D 19/10

(54) **Verfahren zum Regeln einer Heizungsanlage und Vorrichtung zur Durchführung des Verfahrens**
Method for controlling a heating system and device for carrying out the method
Procédé de régulation d'une installation de chauffage et dispositif pour la mise en oeuvre

(43) Veröffentlichungstag der Anmeldung: 04.05.1994
(73) Patentinhaber: Landis & Gyr Technology Innovation AG, 6301 Zug (CH)
(72) Erfinder: Kocher, Peter, CH-6043 Adligenswil (CH); Ulrich, Gerhard H., CH-5643 Sins (CH)
(74) Vertreter: Müller, Hans-Jürgen, Dipl.-Ing.

(56) Entgegenhaltungen:
- EP-A- 0 070 471
- EP-A- 0 181 259
- EP-A- 0 308 848
- EP-A- 0 316 496
- CH-A- 667 513
- DE-A- 1 454 448
- DE-A- 3 732 833
- GB-A- 2 003 612
- US-A- 4 380 317
- IECON¡89 Bd. 1, 6. November 1989, PHILADELPHIA Seiten 721 - 725 KIYOSHI OHISHI 'ROBUST TEMPERARURE CONTROL OF THERMOSTATIC OVEN BASED ON ADAPTATIVE AND FUZZY ALGORITHM'

## Beschreibung

Die Erfindung bezieht sich auf ein Verfahren zum Regeln einer Heizungsanlage sowie auf eine Vorrichtung zur Durchführung des Verfahrens gemäß dem Oberbegriff der Ansprüche 1 und 14.

Solche verfahren und Vorrichtungen eignen sich beispielsweise zum Regeln der Temperatur eines Wärmeträgermediums in einer Zentralheizungsanlage, bei der die Raumtemperatur einzelner Räume oder Raumgruppen, z.B. Wohnungen, separat regelbar ist.

Ein Verfahren und eine Vorrichtung der im Oberbegriff der Ansprüche 1 und 14 genannten Art ist aus der DE-OS-14 54 448 bekannt. Hier wird die Höhe der Vorlauftemperatur des Wärmeträgermediums durch jenen Thermostaten bestimmt, der auf die höchste Temperatur eingestellt ist. Durch diese Betriebsweise sollte sichergestellt werden, daß der Heizbedarf aller Räume oder Wohnungen gedeckt wird.

Aus der DE-A1-28 37 262 ist ein Regelsystem zum Heizen und Kühlen bekannt. Die Menge des jedem Verbraucher zugeführten Wärmeträgermediums wird über AUF/ZU-Ventile gesteuert. Dabei werden die AUF/AUF+ZU-Zeitverhältnisse aller Ventile gemittelt, um ein Maß für den Wärmebedarf zu erhalten.

Der Erfindung liegt die Aufgabe zugrunde, mit einfachen Mitteln für eine bessere Adaption an den tatsächlichen Wärmebedarf zu sorgen.

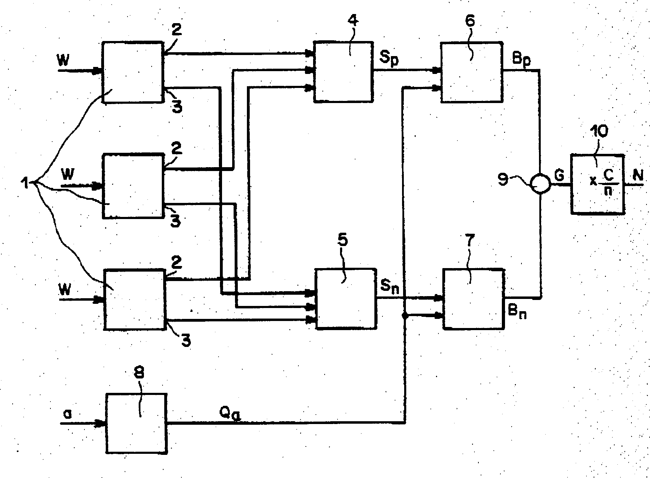

Die Erfindung ist in den Patentansprüchen 1 bezüglich des Verfahrens und 14 bezüglich der Heizanlage gekennzeichnet und in Unteransprüchen sind weitere Verbesserungen beansprucht. Dabei wird bei den Gegenständen der Patentansprüche 3 und 15 ein zusätzlicher Vorteil erreicht, wonach unter Beibehaltung des Regelprinzips den Komforterwartungen einerseits und den Ökonomiegedanken anderseits noch besser entsprochen werden kann. Nachfolgend werden ein Ausführungsbeispiel für das erfindungsgemäße Verfahren sowie ein Ausführungsbeispiel für eine das Verfahren durchführende Vorrichtung näher erläutert, letzteres anhand der Zeichnung.

Die einzige Figur zeigt eine Anordnung zur Verknüpfung mehrerer Wärmebedarfssignale zu einem Leistungsänderungssignal.

Das erfindungsgemäße Verfahren dient zum Regeln des einzelnen Räumen einer aus mehreren Räumen und/oder Gruppen von Räumen, beispielsweise Wohnungen, bestehenden Zentralheizungsanlage zugeführten mittleren Wärmemengenstroms aufgrund des jeweiligen Bedarfs. Innerhalb einer Zentralheizungsanlage haben die einzelnen Wärmeverbraucher durchaus unterschiedlichen Wärmebedarf, wobei unterschiedliches Benutzerverhalten als auch unterschiedliche Raumdaten (Lage der Räume, Fremdwärmequellen) eine Rolle spielen.

Erfindungsgemäß wird für jeden einzelnen Raum bzw. jede einzelne Wohnung separat ein vorzeichenbehaftetes Wärmebedarfssignal W ermittelt, wobei das Vorzeichen angibt, ob ein Mehr- oder Minderbedarf besteht. Die Wärmebedarfssignale W werden zu einem Gesamtbedarfssignal G verknüpft, wobei der Art der Verknüpfung eine entscheidende Rolle zukommt. Zu verschiedenen Zeitpunkten können in einer solchen Heizungsanlage ganz verschiedene Zustände auftreten. Es kann der Fall eintreten, daß in einigen Räumen oder Wohnungen der Sollwert der Raumtemperatur nicht erreicht ist, während er in anderen Räumen oder Wohnungen überschritten ist. Auch ein mehr oder weniger gleichzeitig erhöhter oder geringerer Wärmebedarf bei allen Räumen oder Wohnungen kann vorkommen.

Zur Ermittlung der einzelnen Wärmebedarfssignale W kann vorteilhaft eine im Heizungskreislauf auftretende Regelabweichung benutzt werden, denn diese ist vorzeichenbehaftet. Bevorzugt kann die Regelabweichung der Raumtemperatur herangezogen werden. Es können aber auch andere Größen, wie etwa das in DE-A1-28 37 262 angegebene AUF/AUF+ZU-Verhältnis von Ventilen oder bei stetigen Ventilen der jeweilige Öffnungsgrad, allein oder in Kombination mit anderen Größen benutzt werden. Mit dem Öffnungsgrad zusammenhängende Größen sind nicht vorzeichenbehaftet, so daß in diesem Fall eine geeignete Wandlung erforderlich ist. Wird bei der Ermittlung eines Wärmebedarfssignals W keine das Vorzeichen bestimmende Regelabweichung berücksichtigt, so ist bei der Wandlung des Signals dafür zu sorgen, daß der vermutliche Gleichgewichtszustand berücksichtigt wird und daß das Vorzeichen auf diesen Gleichgewichtszustand Bezug nimmt.

Vorteilhaft kann auch eine Auswertung der Regelabweichung in Kombination mit der Auswertung der Ventilstellung sein, wobei durch die Regelabweichung das Vorzeichen bestimmt ist, während die Ventilstellung bei der Betragsbildung Berücksichtigung findet. Wesentlich ist, daß innerhalb einer Heizungsanlage alle einzelnen Wärmebedarfssignale W auf die gleiche Weise ermittelt werden.

Die Bildung des Gesamtbedarfssignals G erfolgt erfindungsgemäß so, daß die negativen Wärmebedarfssignale W zu einer ersten Teilsumme Sₙ und die positiven Wärmebedarfssignale zu einer zweiten Teilsumme Sₚ summiert werden. Die Summation erfolgt also separat. Diese Teilsummen Sₙ und Sₚ werden mit einer Gewichtung zu einem Gesamtbedarfssignal G verarbeitet.

Der Gewichtung kommt große Bedeutung zu. Das vorliegende Verfahren bietet hier große Freiheit. Je nach der Art der Realisierung des Verfahrens durch eine analoge oder digitale Vorrichtung läßt sich die Summation unterschiedlich gestalten. Insbesondere beim Einsatz einer Regelungsvorrichtung mit einem Mikroprozessor sind unterschiedliche Ausgestaltungen auch einfach implementierbar. Durch die Bildung von vorzeichenbehafteten Wärmebedarfssignalen wird auf einfache Weise ermöglicht, bei der Bildung des Gesamtbedarfssignals G unterschiedliche Strategien zu verwirklichen, etwa die Maximierung der Energieeinsparung oder die Maximierung des Komforts.

Zeigen mehr oder weniger sämtliche Heizgruppen einer Heizanlage einen Mehrbedarf an, was beispielsweise dann der Fall ist, wenn im Anschluß an eine Nachtabsenkung der größte Teil der Heizgruppen auf Komfortbetrieb umschaltet, so führt dieser Mehrbedarf automatisch zu einer Erhöhung der Heizleistung, ohne daß es spezieller Maßnahmen zur Auslösung der sogenannten Schnellaufheizung bedarf. Die Schwierigkeiten der Implementierung eines geeigneten Algorithmus für diese Schnellaufheizung bei Heizanlagen mit mehreren Heizgruppen, die zu durchaus unterschiedlichen Zeiten von Nachtabsenkung auf Komfortbetrieb umschalten können, sind dadurch automatisch vermieden.

Die Größe der Leistungsänderung wird durch das Gesamtbedarfssignal G bestimmt. Sind die einzelnen Wärmebedarfssignale W und auch das aus diesen gebildete Gesamtbedarfssignal G vorzeichenbehaftet, so bedeutet ein negatives Gesamtbedarfssignal G, daß die Leistung verringert werden soll, und entsprechend bedeutet ein positives Gesamtbedarfssignal G, daß die Leistung erhöht werden soll.

Nachfolgend werden nun Elemente einer Vorrichtung zur Durchführung des zuvor beschriebenen Verfahrens anhand der Zeichnung erläutert. In der Figur sind mit der Bezugszahl 1 Diskriminatoren bezeichnet, deren jeder einen Eingang aufweist, an dem das Wärmebedarfssignal W anliegt, das von den einzelnen Räumen und/oder Gruppen von Räumen stammt. Die Zahl der Diskriminatoren 1 richtet sich nach der Zahl der in einer Heizungsanlage vorhandenen separat erzeugten Wärmebedarfssignale W. Bei einer Heizungsanlage eines Mehrfamilienhauses entspricht sie beispielsweise der Zahl der Wohnungen, bei Anlagen mit Einzelraumregelung beispielsweise der Zahl der Räume. Jeder Diskriminator 1 besitzt zwei Ausgänge: einen ersten Ausgang 2, der jeweils dann das Wärmebedarfssignal W führt, wenn es positiv ist, und einen zweiten Ausgang 3, der das Wärmebedarfssignal W führt, wenn es negativ ist. Jeder Diskriminator 1 stellt also einen Vergleicher dar, der das Wärmebedarfssignal W je nach dessen Vorzeichen auf Ausgang 2 oder 3 schaltet.

Alle Ausgänge 2 der Diskriminatoren 1 sind mit Eingängen eines ersten Summierers 4 verbunden. Der Summierer 4 bildet die Summe Sₚ aller positiven Wärmebedarfssignale W, die an einem Ausgang zur Verfügung steht. In gleicher Weise sind alle Ausgänge 3 der Diskriminatoren 1 mit Eingängen eines zweiten Summierers 5 verbunden. Der Summierer 5 bildet die Summe Sₙ aller negativen Wärmebedarfssignale W, die an einem Ausgang anliegt.

Die Weiterverarbeitung der getrennt ermittelten positiven und negativen Summen Sₚ und Sₙ geschieht vorteilhaft dadurch, daß der Ausgang des Summierers 4 mit einem ersten Eingang eines Dividierers 6 verbunden ist, während der Ausgang des Summierers 5 auf einen ersten Eingang eines Multiplizierers 7 geführt ist. Dividierer 6 und Multiplizierer 7 besitzen je einen zweiten Eingang. Diese zweiten Eingänge sind mit dem Ausgang eines Radizierglieds 8 verbunden. Am Radizierglied 8 liegt ein Gewichtungsparameter a an, der vom Betreiber wählbar ist und die schon eingangs erwähnte Art der Gewichtung bestimmt.

Das Radizierglied 8 bildet die Quadratwurzel Qₐ. Mit diesem aus dem Gewichtungsparameter a abgeleiteten Wert dividiert der Dividierer 6 die Summe Sₚ und bildet so einen positiven Bedarfsanteil Bₚ. Analog dazu ermittelt der Multiplizierer 7 aus der Summe Sₙ und der Quadratwurzel Qₐ durch Multiplikation dieser Werte einen negativen Bedarfsanteil Bₙ.

Das Radizierglied 8 kann durchaus entfallen und der Gewichtungsparameter a unmittelbar auf den Dividierer 6 und den Multiplizierer 7 einwirken. Die Bildung der Quadratwurzel Qₐ hat jedoch den Vorteil, daß das Wesen der unterschiedlichen Gewichtung leicht durchschaubar ist. Wird vom Dividierer 6 und vom Multiplizierer 7 die Quadratwurzel Qₐ verarbeitet, so erfolgt, wie rechnerisch nachzuweisen ist, eine Bevorzugung der positiven Wärmebedarfssignale W gegenüber den negativen Wärmebedarfssignalen W um den Faktor a.

Die Ausgänge von Dividierer 6 und Multiplizierer 7 sind auf Eingänge eines weiteren Summierers 9 geführt. Der Summierer 9 bildet das Gesamtbedarfssignal G als die Summe der Bedarfsanteile Bₚ und Bₙ und liefert dieses an ein Proportionalglied 10. Dieses Proportionalglied 10 verstärkt das Gesamtbedarfssignal G, das entsprechend den unterschiedlichen Größen der Bedarfsanteile Bₚ und Bₙ positiv oder negativ sein kann, mit einem Quotienten aus einer Konstanten C und der Zahl n der Diskriminatoren 1, die wie erwähnt der Zahl der Wohnungen bzw. Räume entspricht. Die Zahl n ist außerdem gleich der Anzahl der separat ermittelten Wärmebedarfssignale W. Am Ausgang des Proportionalglieds 10 steht das so verstärkte Signal an, das ein Maß für die geforderte Leistungsänderung ist. Es ist als Leistungsänderungssignal N bezeichnet.

Das Leistungsänderungssignal N wirkt nun in bekannter Weise entweder auf die Drehzahl der Umwälzpumpe der Heizungsanlage ein oder bewirkt eine Veränderung des Sollwerts der Vorlauftemperatur, wahlweise durch Verschiebung der Heizkurve oder durch Variation des Sollwertes der Raumtemperatur.

Vorteilhaft kann es sein, den Wärmemengenstrom durch Veränderung der Durchflußgeschwindigkeit des Wärmeträgermediums zu variieren. Dabei ist jedoch eine obere Grenze zu beachten, um Strömungsgeräusche zu vermeiden. Auch eine untere Grenze ist einzuhalten, weil einer Verringerung der Durchflußgeschwindigkeit des Wärmeträgermediums das Zeitverhalten der Regelstrecke ungünstig beeinflußt.

Deshalb kann es vorteilhaft sein, den Wärmemengenstrom durch Variation der Vorlauftemperatur des Wärmeträgermediums zu verändern.

Dabei ist es ganz besonders vorteilhaft, wenn nicht die Vorlauftemperatur an sich erhöht oder erniedrigt wird, sondern wenn diese Variation der Vorlauftemperatur dadurch erfolgt, daß eine bei der Bestimmung der Vorlauftemperatur in Abhängigkeit von einer Außentemperatur wirksame Heizkurve unverändert bleibt und stattdessen der Sollwert der Raumtemperatur temporär variiert wird. Beim Verändern des Raumtemperatur-Sollwerts wird ganz automatisch in der durch die Heizkurve bestimmten Weise die Vorlauftemperatur unterschiedlich beeinflußt, also auf die Bauart der Heizungsanlage Rücksicht genommen. Eine unterschiedliche Änderung der Vorlauftemperatur je nach Bauart der Heizungsanlage, Radiatorheizung einerseits und Fußbodenheizung andererseits, geschieht somit automatisch. Dadurch werden Einstellvorgänge für die Heizkurve nicht tangiert und etwa vorhandene automatische Heizkurven-Adaptionsvorgänge nicht gestört.

Der Gewichtungsparameter a hat vorteilhaft einen Wert zwischen 0,25 und 4. Für große Werte von a wird die Summe Sₚ aller positiven Wärmebedarfssignale W stark gewichtet, was unter Umständen dazu führen kann, daß schon der Mehrbedarf einer einzigen Wohnung zu einer Anhebung des Leistungsangebots führt. Große Werte von a bedeuten somit eine Komfortmaximierung. Umgekehrt wird bei kleinen Werten von a die Summe Sₙ aller negativen Wärmebedarfssignale W stark gewichtet, was dazu führt, daß eine Leistungsanhebung nur dann auftritt, wenn die Mehrzahl aller Wohnungen einen Mehrbedarf hat. Kleine Werte von a bedeuten somit eine Maximierung der Energieeinsparung. Der Betreiber der Heizungsanlage, beispielsweise der Hauswart in einem Mehrfamilienhaus, hat also durch die Möglichkeit zur Einstellung des Gewichtungsparameters a einen Einfluß auf die Betriebsweise der Heizungsanlage. Damit kann beispielsweise erreicht werden, daß durch Wahl eines kleinen Wertes von a die Bewohner angehalten werden, nicht unnötig zu lüften.

Vorteilhaft ist es auch, den Gewichtsparameter a zeitabhängig zu verändern. So ist es beispielsweise vorteilhaft, in jener Zeitperiode, da die Heizungsregelungen in der Mehrzahl der Räume oder Wohnungen von Absenk- auf Komfortbetrieb umschaltet, dem Gewichtsparameter a einen Wert größer 1 zu geben und im Verlaufe des Tages auf einen Wert kleiner 1 umzuschalten. Damit wird erreicht, daß im Aufheizbetrieb nach der Nachtabsenkung der Komfort der Bewohner im Vordergrund steht, während später einer besonders ökonomischen Betriebsweise der Vorzug gegeben wird. Auf diese Weise wird die Schnellaufheizung weiter verbessert.

Ebenso kann es vorteilhaft sein, von einem Testraum auf den Gewichtsparameter a einzuwirken. Auch die Beeinflussung des Gewichtsparameters a durch einen zusätzlichen Witterungsfühler kann zweckmäßig sein. Dieser zusätzliche Witterungsfühler kann beispielsweise ein Lichtfühler sein, mit dessen Hilfe ermittelt werden kann, ob die Sonne scheint. Damit kann vorteilhaft erreicht werden, daß bei Sonnenschein der Gewichtsparameter a verkleinert wird. Dies trägt dem Umstand Rechnung, daß Menschen bei Sonnenschein ein anderes Wärmeempfinden haben als beispielsweise bei Nebellagen. Durch die Verkleinerung des Gewichtsparameters a bei Sonnenschein kann zusätzlich Energie gespart werden, ohne das Empfinden der Bewohner zu beeinträchtigen.

Das beschriebene Verfahren und die dieses Verfahren ausführende Vorrichtung kann vorzugsweise zur Regelung einer Heizunganlage in Mehrfamilienhäusern verwendet werden, bei der die einzelnen Wohnungen separat geregelt werden. Anwendbar ist die Erfindung gleichfalls bei größeren Anlagen mit Einzelraum-Regelung.

## Patentansprüche

1. Verfahren zum Regeln der Raumtemperatur bzw. des mittleren Wärmemengenstromes in an eine Zentralheizungsanlage angeschlossenen Räumen und/oder Raumgruppen, bei dem aus dem Wärmebedarf einzelner Räume und/oder Raumgruppen ein Gesamtbedarfssignal (G) ermittelt und zur Steuerung bzw. Regelung des mittleren Wärmemengenstroms verwendet wird, welcher der Gesamtheit der Heizkörper in den Räumen bzw. Raumgruppen der Anlage zuführbar ist,
**dadurch gekennzeichnet,**
daß für jeden Raum bzw. für jede Raumgruppe ein vorzeichenbehaftetes Wärmebedarfssignal (W) ermittelt wird,
daß die Wärmebedarfssignale (W) mit positiven Vorzeichen zu einer Teilsumme (SP) und die Wärmebedarfssignale (W) mit negativen Vorzeichen zu einer weiteren Teilsumme (Sₙ) summiert werden,
und daß jede dieser Teilsummen (Sₚ, Sₙ) zu dem Gesamtbedarfssignal (G) verarbeitet wird.

2. Verfahren nach Anspruch 1,
**dadurch gekennzeichnet,**
daß aus dem Gesamtbedarfssignal (G) ein Leistungsänderungssignal (N) gebildet und zur Steuerung bzw. Regelung des mittleren Wärmemengenstromes verwendet wird.

3. Verfahren nach Anspruch 1 oder 2,
**dadurch gekennzeichnet,**
daß die beiden Teilsummen (Sₙ, Sₚ) mit einer Gewichtungsgröße (Qₐ) zu dem Gesamtbedarfssignal (G) verarbeitet werden.

4. Verfahren nach Anspruch 3,
**dadurch gekennzeichnet,**
daß die Gewichtung der positiven Teilsumme (Sₚ) und der negativen Teilsumme (Sₙ) unterschiedlich ist.

5. Verfahren nach Anspruch 4,
**dadurch gekennzeichnet,**
daß die positive Teilsumme (Sₚ) durch die Gewichtungsgröße (Qₐ) dividiert wird, daß die negative Teilsumme (Sₙ) mit dieser Gewichtungsgröße (Qₐ) multipliziert wird und daß die Summe des genannten Quotienten (Bₚ) und des genannten Produkts (Bn) zur Bildung des Gesamtbedarfssignals (G) verwendet werden.

6. Verfahren nach Anspruch 5,
**dadurch gekennzeichnet,**
daß die Gewichtungsgröße (Qₐ) durch Radizieren eines Gewichtungsparameters (a) gebildet wird, der angibt, um wiewiel die positiven Wärmebedarfssignale (W) gegenüber den negativen Wärmebedarfssignalen (W) bevorzugt werden.

7. Verfahren nach einem der Ansprüche 3-6,
**dadurch gekennzeichnet,**
daß die Größe des Gewichtungsparameters (a) im Tagesverlauf variiert wird.

8. Verfahren nach einem der Ansprüche 3-7,
**dadurch gekennzeichnet,**
daß die Größe des Gewichtungsparameters (a) durch das Signal eines auf Sonneneinstrahlung ansprechenden zusätzlichen Witterungsfühlers variiert wird.

9. Verfahren nach einem der Ansprüche 2 - 8,
**dadurch gekennzeichnet,**
daß das Leistungsänderungssignal (N) unter Berücksichtigung von Daten der Heizungsanlage aus dem Gesamtbedarfssignal (G) gebildet wird.

10. Verfahren nach Anspruch 9,
**dadurch gekennzeichnet,**
daß das Leistungsänderungssignal (N) das Produkt des Gesamtbedarfssignals (G) mit einem Quotienten aus einer Konstanten (C) und der Anzahl (n) der Wärmebedarfssignale (W) ist.

11. Verfahren nach Anspruch 9 oder 10,
**dadurch gekennzeichnet,**
daß der Wärmemengenstrom in der Heizungsanlage nach Maßgabe des Leistungsänderungssignal (N) durch Variation der Durchflußgeschwindigkeit des Wärmeträgermediums variiert wird.

12. Verfahren nach einem der Ansprüche 9 - 11,
**dadurch gekennzeichnet,**
daß der Wärmemengenstrom in der Heizungsanlage nach Maßgabe des Leistungsänderungssignals (N) durch Variation der Vorlauftemperatur des Wärmeträgermediums variiert wird.

13. Verfahren nach Anspruch 12,
**dadurch gekennzeichnet,**
daß die Variation der Vorlauftemperatur dadurch bewirkt wird,
daß eine bei der Bestimmung der Vorlauftemperatur in Abhängigkeit von einer Außentemperatur wirksame Heizkurve unverändert gehalten und statt dessen der Sollwert einer Raumtemperatur temporär variiert wird.

14. Heizungsregler zum Regeln der Raumtemperatur bzw. des mittleren Wärmemengenstromes in an eine Zentralheizungsanlage angeschlossenen Räumen und/oder Raumgruppen, bei dem eine Verknüpfungseinrichtung aus dem Wärmebedarf einzelner Räume bzw. Raumgruppen ein Gesamtbedarfssignal (G) ermittelt, das eine Regel- bzw. Steuereinrichtung für den den Räumen bzw. Raumgruppen zuzuführenden mittleren Wärmemengenstrom steuert,
**dadurch gekennzeichnet,**
daß die Verknüpfungseinrichtung den Räumen bzw. Raumgruppen zugeordnete Diskriminatoren (1) zum Erzeugen positiver und/oder negativer Wärmebedarfssignale (W) sowie ein Summierglied (4) zum Summieren aller positiver Wärmebedarfssignale (W) und ein weiteres Summierglied (5) zum Summieren aller negativer Wärmebedarfssignale (W) aufweist und in Abhängigkeit von den durch die Summierglieder (4,5) gebildeten Teilsummen (Sₚ, Sₙ) das Gesamtbedarfssignal (G) erzeugt.

15. Heizungsregler nach Anspruch 14,
**dadurch gekennzeichnet,**
daß die Verknüpfungseinrichtung ein Dividierglied (6), dem die eine Teilsumme (Sₚ) zuführbar ist, und ein Multiplizierglied (7), dem die andere Teilsumme (Sₙ) zuführbar ist, aufweist und dem Dividierglied (6) und/oder dem Multiplizierglied (7) ein Gewichtungsfaktor (Qₐ) zur Bildung eines Bedarfsanteils (Bₚ) und eines weiteren Bedarfsanteils (Bₙ) zuführbar ist, und daß ein drittes Summierglied (9) aus den beiden Bedarfsanteilen (Bₚ,Bₙ) das Gesamtbedarfssignal (G) bildet, von dem ein Leistungssignal (N) abhängt, das die Steuereinrichtung steuert.

## Claims

1. A method of regulating the room temperature or the mean quantitative heat flow in rooms and/or groups of rooms connected to a central heating installation, in which a total demand signal (G) is ascertained from the heat demand of individual rooms and/or groups of rooms and is used to control or regulate the mean quantitative heat flow which can be supplied to the totality of the heating units in the rooms or groups of rooms of the installation, characterised in that a heat demand signal (W) with attendant sign is ascertained for each room or for each group of rooms, that the heat demand sigals (W) with a positive sign are added to give a subtotal (SP) and the heat demand signals (W) with a negative sign are added to give a further subtotal (Sₙ), and that each of said subtotals (Sₚ, Sₙ) is processed to give the total demand signal (G).

2. A method according to claim 1 characterised in that an output-modification signal (N) is formed from the total demand signal (G) and used for controlling or regulating the mean quantitative heat flow.

3. A method according to claim 1 or claim 2 characterised in that the two subtotals (Sₙ, Sₚ) are processed with a weighting value (Qₐ) to give the total demand signal (G).

4. A method according to claim 3 characterised in that the weighting of the positive subtotal (Sₚ) and the negative subtotal (Sₙ) is different.

5. A method according to claim 4 characterised in that the positive subtotal (Sₚ) is divided by the weighting value (Qₐ), the negative subtotal (Sₙ) is multiplied by said weighting value (Qₐ) and that the sum of said quotient (Bₚ) and said product (Bn) are used for forming the total demand signal (G).

6. A method according to claim 5 characterised in that the weighting value (Qₐ) is formed by extracting the root of a weighting parameter (a) which specifies by how much the positive heat demand signals (W) are preferred in relation to the negative heat demand signals (W).

7. A method according to one of claims 3 to 6 characterised in that the magnitude of the weighting parameter (a) is varied in the course of the day.

8. A method according to one of claims 3 to 7 characterised in that the magnitude of the weighting parameter (a) is varied by the signal of an additional weather sensor responsive to incident solar radiation.

9. A method according to one of claims 2 to 8 characterised in that the output-modification signal (N) is formed from the total demand signal (G) having regard to data of the heating installation.

10. A method according to claim 9 characterised in that the output-modification signal (N) is the product of the total demand signal (G) with a quotient from a constant (C) and the number (n) of the heat demand signals (W).

11. A method according to claim 9 or claim 10 characterised in that the quantitative heat flow in the heating installation is varied in accordance with the output-modification signal (N) by a variation in the flow speed of the heat-carrier medium.

12. A method according to ore of claims 9 to 11 characterised in that the quantitative heat flow in the heating installation is varied in accordance with the output-modification signal (N) by a variation in the flow temperature of the heat-carrier medium.

13. A method according to claim 12 characterised in that the variation in the flow temperature is effected by a heating curve which is operative in determining the flow temperature in dependence on an external temperature being kept unchanged and instead the reference value of a room temperature being temporarily varied.

14. A heating regulator for regulating the room temperature or the mean quantitative heat flow in rooms and/or groups of rooms connected to a central heating installation, in which an interlinking means ascertains from the heat demand of individual rooms or groups of rooms a total demand signal (G) which controls a regulating or control means for the mean quantitative heat flow to be fed to the rooms or groups of rooms, characterised in that the interlinking means has discriminators (1) associated with the rooms or groups of rooms for producing positive and/or negative heat demand signals (W) and a summing member (4) for summing all positive heat demand signals (W) and a further summing member (5) for summing all negative heat demand signals (W) and produces the total demand signal (G) in dependence on the subtotals (Sₚ, Sₙ) formed by the summing members (4, 5).

15. A heating regulator according to claim 14 characterised in that the interlinking means has a divider member (6) to which the one subtotal (Sp) can be passed and a multiplier member (7) to which the other subtotal (Sₙ) can be passed, and a weighting factor (Qₐ) can be fed to the divider member (6) and/or the multiplier member (7) to form a demand component (Bₚ) and a further demand component (Bₙ), and that a third summing member (9) forms from the two demand components (Bₚ, Bₙ) the total demand signal (G) on which depends an output signal (N) which controls the control means.

## Revendications

1. Procédé de régulation de la température ambiante ou du flux de quantité de chaleur moyen dans des locaux et/ou des groupes de locaux raccordés à une installation de chauffage central, d'après lequel, à partir de la demande de chaleur de locaux individuels et/ou de groupes de locaux, est déterminé un signal de demande globale (G) qui est utilisé pour la commande et la régulation du flux de quantité de chaleur moyen pouvant être fourni à l'ensemble des corps chauffants dans les locaux ou groupes de locaux de l'installation,
**caractérisé**
en ce que pour chaque local ou chaque groupe de locaux, est déterminé un signal de demande de chaleur (W) affecté d'un signe,
en ce que l'on effectue la sommation des signaux de demande de chaleur (W) de signe positif en une somme partielle (Sₚ), et des signaux de demande de chaleur (W) de signe négatif en une autre somme partielle (Sₙ),
et en ce que chacune de ces sommes partielles (Sₚ, Sₙ) est traitée pour l'obtention du signal de demande globale (G).

2. Procédé selon la revendication 1, **caractérisé** en ce qu'à partir du signal de demande globale (G) est formé un signal de variation de puissance (N), qui est utilisé pour la commande ou la régulation du flux de quantité de chaleur moyen.

3. Procédé selon la revendication 1 ou 2, **caractérisé** en ce que les deux sommes partielles (Sₚ, Sₙ) sont traitées avec une grandeur de pondération (Qₐ) pour l'obtention du signal de demande globale (G).

4. Procédé selon la revendication 3, **caractérisé** en ce que la pondération de la somme partielle positive (Sₚ) et la pondération de la somme partielle négative (Sₙ) sont différentes.

5. Procédé selon la revendication 4, **caractérisé** en ce que la somme partielle positive (Sₚ) est divisée par la grandeur de pondération (Qₐ), en ce que la somme partielle négative (Sₙ) est multipliée par cette grandeur de pondération (Qₐ), et en ce que la somme du quotient cité (Bₚ) et du produit cité (Bₚ) sont utilisées pour la formation du signal de demande globale (G).

6. Procédé selon la revendication 5, **caractérisé** en ce que la grandeur de pondération (Qₐ) est formée par extraction de la racine d'un paramètre de pondération (a), qui indique de combien les signaux de demande de chaleur (W) positifs sont prioritaires par rapport aux signaux de demande de chaleur (W) négatifs.

7. Procédé selon l'une des revendications 3-6, **caractérisé** en ce que l'on fait varier la grandeur du paramètre de pondération (a), durant la journée.

8. Procédé selon l'une des revendications 3-7, **caractérisé** en ce que la grandeur du paramètre de pondération (a) est modifiée par le signal d'une sonde atmosphérique supplémentaire, réagissant à l'ensoleillement.

9. Procédé selon l'une des revendications 2-8, **caractérisé** en ce que le signal de variation de puissance (N) est formé à partir du signal de demande globale (G), en tenant compte de données de l'installation de chauffage.

10. Procédé selon la revendication 9, **caractérisé** en ce que le signal de variation de puissance (N) est le produit du signal de demande globale (G) par le quotient d'une constante (C) et du nombre (n) des signaux de demande de chaleur (W).

11. Procédé selon la revendication 9 ou 10, **caractérisé** en ce que l'on fait varier le flux de quantité de chaleur dans l'installation de chauffage au prorata du signal de variation de puissance (N), par variation de la vitesse de passage d'écoulement du milieu caloporteur.

12. Procédé selon l'une des revendications 9-11, **caractérisé** en ce que l'on fait varier le flux de quantité de chaleur dans l'installation de chauffage au prorata du signal de variation de puissance (N), par variation de la température aller du milieu caloporteur.

13. Procédé selon la revendication 12, **caractérisé** en ce que la variation de la température aller est produite par le fait que l'on maintient invariable une courbe de chauffe active lors de la détermination de la température aller en fonction d'une température extérieure, et qu'à la place on fait varier temporairement la valeur de consigne d'une température ambiante de local.

14. Régulateur de chauffage destiné à réguler la température ambiante de local ou le flux de quantité de chaleur dans des locaux et/ou des groupes de locaux raccordés à une installation de chauffage central, dans lequel un système d'opérateur logique détermine, à partir de la demande de chaleur de locaux individuels ou groupes de locaux, un signal de demande globale (G), qui pilote un dispositif de régulation et de commande pour le flux de quantité de chaleur moyen à fournir aux locaux ou groupes de locaux,
**caractérisé**
en ce que le système d'opérateur logique, d'une part comprend des discriminateurs (1) affectés aux locaux ou groupes de locaux, pour élaborer des signaux de demande de chaleur (W) positifs et/ou négatifs, ainsi qu'un organe de sommation (4) pour faire la somme de tous les signaux de demande de chaleur (W) positifs et un autre organe de sommation (5) pour faire la somme de tous les signaux de demande de chaleur (W) négatifs, et d'autre part élabore le signal de demande globale (G) en fonction des sommes partielles (Sₚ, Sₙ) formées par les organes de sommation (4, 5).

15. Régulateur de chauffage selon la revendication 14, **caractérisé** en ce que le système d'opérateur logique comprend un organe de division (6) auquel peut être fournie l'une (Sₚ) des sommes partielles, et un organe de multiplication (7) auquel peut être fournie l'autre somme partielle (Sₙ), et qu'à l'organe de division (6) et/ou à l'organe de multiplication (7) peut être fourni un facteur de pondération (Qₐ) pour la formation d'une part de demande (Bₚ) et d'une autre part de demande (Bₙ), et en ce qu'un troisième organe de sommation (9) forme, à partir des deux parts de demande (Bₚ, Bₙ), le signal de demande globale (G), duquel dépend un signal de puissance (N) qui pilote le dispositif de commande.
